# FASCICULE DE BREVET EUROPEEN

(11) **EP 2 681 074 B1**
(45) Date de publication et mention de la délivrance du brevet: **19.11.2014**
(21) Numéro de dépôt: 12707837.6
(22) Date de dépôt: 01.02.2012
(51) Int. Cl.: B60N 2/58, B60N 2/70

(54) **PROCÉDÉ DE RÉALISATION D'UN COMPLEXE DE SIÈGE À EFFET 3D, ET SIÈGE ASSOCIÉ**
VERFAHREN ZUR ERZEUGUNG EINES SITZKOMPLEXES MIT 3D-EFFEKT UND ZUGEHÖRIGER SITZ
METHOD FOR CREATING A 3D EFFECT SEAT COMPLEX AND ASSOCIATED SEAT

(30) Priorité: 28.02.2011 FR 1151613
(43) Date de publication de la demande: 08.01.2014
(73) Titulaire: Peugeot Citroën Automobiles SA, 78140 Vélizy Villacoublay (FR)
(72) Inventeur: THIEL, Marc, 25400 Exincourt (FR)
(74) Mandataire: Jeannin, Laurent Jean-Pierre
(86) Numéro de dépôt international: PCT/FR2012/050215
(87) Numéro de publication internationale: WO 2012/117175

(56) Documents cités:
- DE-A1- 4 445 918
- KR-U- 20100 011 903
- US-A- 3 102 755
- US-A1- 2005 160 956

## Description

L'invention concerne les sièges, et plus précisément la réalisation des complexes de coiffe d'habillage que comprennent certains sièges.

On entend ici par "complexe" un ensemble d'éléments ou composants solidarisés les uns aux autres afin de constituer une partie, généralement centrale, d'une coiffe d'habillage d'un dossier ou d'une assise de siège. De tels complexes sont généralement utilisés, bien que non limitativement, pour habiller des sièges de véhicule, éventuellement de type automobile.

Comme le sait l'homme de l'art, plusieurs procédés (ou méthodes) ont été proposé(e)s pour réaliser des complexes de siège comportant des "animations".

On entend ici par "animation" la définition de formes, généralement géométriques (par exemple rectangulaires ou carrées), au moyen de coutures.

Ainsi, il a été proposé de solidariser les uns aux autres, par exemple par couture, plusieurs petits empiècements, généralement de formes rectangulaires ou carrées. Par exemple, on peut assembler des rectangles dont la plus grande dimension est longitudinale et des rectangles dont la plus grande dimension est transversale.

Il a également été proposé de solidariser des empiècements supérieur et inférieur les uns aux autres au moyen de coutures dites "pleine peau" suivant des directions transversale et longitudinale.

Il a également été proposé de solidariser les uns aux autres, par exemple par couture, plusieurs grands empiècements longitudinaux subdivisés chacun au moyen de coutures pleine peau en sous-parties, éventuellement de dimensions différentes et définissant chacune une animation.

Ces procédés (ou méthodes) présentent tous au moins un inconvénient. En effet, ils doivent être intégralement mis en oeuvre manuellement par une ou plusieurs personnes et/ou consomment de grandes quantités d'empiècements, ce qui rend très onéreux les complexes qu'ils permettent de fabriquer, et/ou ils ne permettent pas d'obtenir des complexes présentant un effet tridimensionnel (ou 3D ou encore volumique) au niveau de leurs coutures, ce qui limite notablement les effets de style de ces complexes.

Il est connu du document DE44 45 918 A1 un procédé de réalisation d'un complexe de siège comportant une étape de solidarisation d'un premier et d'un deuxième empiècement de façon un former un logement, et d'installation, dans le logement, d'une bande déformable.

Il est connu du document KR 2010 00 11 903 U de confectionner des coiffes à motif tridimensionnel.

L'invention a donc notamment pour but de proposer un procédé alternatif qui ne présente pas tout ou partie des inconvénients précités.

Ce procédé de réalisation de complexe de siège comprend les étapes suivantes:
(i) solidariser des empiècements supérieur et inférieur (devant faire partie d'un complexe de siège) en réalisant deux coutures longitudinales respectivement sur deux bords longitudinaux, et au moins une couture longitudinale (comportant en au moins un endroit choisi un décrochement pointant vers une zone transversale) dans une partie intermédiaire située entre ces deux bords longitudinaux, de manière à définir au moins deux logements longitudinaux entre les empiècements inférieur et supérieur,
(ii) installer une bande déformable dans chaque logement longitudinal,
(iii) solidariser les empiècements inférieur et supérieur en réalisant dans chaque zone transversale une couture transversale passant par un décrochement correspondant, en repliant sur lui-même un excédant d'empiècement supérieur induit par la présence de ce décrochement, afin de définir dans chaque logement longitudinal des sous-parties contenant respectivement des parties de la bande déformable correspondante, et
(iv) solidariser les empiècements inférieur et supérieur en réalisant deux coutures transversales respectivement sur deux bords transversaux, afin d'achever de réaliser le complexe de siège.

Un tel procédé permet de réaliser assez facilement des complexes comportant de nombreuses animations à partir d'un unique empiècement supérieur et d'un unique empiècement inférieur dont les dimensions initiales sont très proches des dimensions finales, ce qui limite les pertes et donc réduit les coûts. En outre, ce procédé peut être automatisé, au moins partiellement, ce qui peut permettre de réduire encore plus les coûts. De plus, ce procédé permet d'obtenir un effet 3D, au niveau des coutures longitudinales et transversales, grâce aux replis des excédants de l'empiècement supérieur au niveau des décrochements, ce qui permet notamment d'obtenir un effet de type dit "bracelet de montre métallique".

Le procédé selon l'invention peut comporter d'autres caractéristiques qui peuvent être prises séparément ou en combinaison suivant les dépendances données dans le jeu de revendications, et notamment :
- à l'étape (i) on peut commencer par définir sur une face externe de l'empiècement supérieur chaque endroit où est située une zone transversale et chaque endroit où doit être réalisée une couture longitudinale de la partie intermédiaire;
   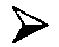 à l'étape (i) on peut définir chaque endroit en traçant une ligne sur la face externe de l'empiècement supérieur;
- à l'étape (iii) on peut replier sur lui-même chaque excédant d'empiècement supérieur de sorte qu'il présente localement une section sensiblement en forme de S;
- les décrochements peuvent présenter une forme sensiblement en V;
- à l'étape (i) on peut réaliser dans la partie intermédiaire deux coutures longitudinales comportant en des endroits choisis qui se correspondent des décrochements pointant vers des zones transversales qui les joignent, de manière à définir trois logements longitudinaux entre les empiècements inférieur et supérieur;
- on peut effectuer l'étape (iii) en plusieurs sous-étapes, dans chacune desquelles on peut réaliser une couture transversale dans une zone transversale située au niveau d'un logement longitudinal jusqu'à ce que l'on parvienne au décrochement correspondant d'une couture longitudinale, puis on peut poursuivre longitudinalement cette couture sur une portion de cette couture longitudinale jusqu'à ce que l'on parvienne à son décrochement suivant pointant vers une autre zone transversale située au niveau d'un autre logement longitudinal voisin, puis on peut poursuivre transversalement cette couture afin de réaliser une autre couture transversale dans cette autre zone transversale jusqu'à ce que l'on parvienne soit à une couture longitudinale d'un bord longitudinal où l'on définit un point d'arrêt, soit à un nouveau décrochement correspondant d'encore une autre couture longitudinale, ce qui contraint à poursuivre longitudinalement la couture sur une portion de cette encore autre couture longitudinale jusqu'à ce que l'on parvienne à son décrochement suivant pointant vers une autre zone transversale située au niveau d'encore un autre logement longitudinal voisin, où l'on poursuit transversalement la couture afin de réaliser encore une autre couture transversale dans cette autre zone transversale jusqu'à ce que l'on parvienne à une couture longitudinale d'un bord longitudinal où l'on définit un point d'arrêt;
   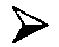 à l'étape (iii) on peut poursuivre longitudinalement la couture sur une portion d'une couture longitudinale dans des trous qui sont identiques à ceux effectués dans l'étape (i) lors de la réalisation de cette couture longitudinale;
- à l'étape (ii) on peut utiliser des bandes déformables réalisées en mousse;
- on peut réaliser le complexe de siège avec un empiècement supérieur en cuir;
- on peut réaliser le complexe de siège avec un empiècement inférieur en matériau non tissé.

L'invention propose également un complexe de siège constitué d'empiècements inférieur et supérieur et de bandes déformables solidarisés entre eux au moyen d'un procédé de réalisation du type de celui présenté ci-avant.

L'invention propose également un siège comprenant au moins un complexe de siège du type de celui présenté ci-avant.

L'invention propose également un véhicule, éventuellement de type automobile, et comprenant au moins un siège du type de celui présenté ci-avant.

D'autres caractéristiques et avantages de l'invention apparaîtront à l'examen de la description détaillée ci-après, et des dessins annexés, sur lesquels :
- la figure 1 illustre schématiquement, dans une vue de face du côté externe, un exemple de réalisation d'un empiècement supérieur d'un complexe de siège selon l'invention, avant le début de sa solidarisation à un empiècement inférieur,
- la figure 2 illustre schématiquement, dans une vue de face du côté externe, l'empiècement supérieur de la figure 1 partiellement solidarisé à un empiècement inférieur après réalisation de la première étape (i) d'un procédé selon l'invention (c'est-à-dire après réalisation des coutures longitudinales),
- la figure 3 illustre schématiquement, dans une vue de face du côté externe, un exemple de réalisation d'une bande déformable, avant son insertion dans l'un des logements longitudinaux du complexe (partiel) de la figure 2,
- la figure 4 illustre schématiquement, dans une vue de face du côté externe, le complexe (partiel) de la figure 2, après réalisation de la deuxième étape (ii) du procédé selon l'invention (c'est-à-dire après insertion des bandes déformables),
- la figure 5 illustre schématiquement, dans une vue en coupe dans un plan YZ, le complexe de la figure 4,
- la figure 6 illustre schématiquement, dans une vue de face du côté externe, le complexe (partiel) de la figure 4, après réalisation de la troisième étape (iii) du procédé selon l'invention (c'est-à-dire après réalisation des coutures transversales (excepté sur les bords transversaux) et des éventuelles portions de coutures longitudinales), et
- la figure 7 illustre schématiquement, dans une vue de face du côté externe, le complexe de la figure 6, à la fin de la réalisation de la quatrième étape (iv) du procédé selon l'invention (c'est-à-dire après réalisation des coutures transversales sur les bords transversaux).

Les dessins annexés pourront non seulement servir à compléter l'invention, mais aussi contribuer à sa définition, le cas échéant.

L'invention a pour but d'offrir un procédé destiné à permettre la réalisation d'un complexe de siège (CS) comportant des animations et destiné à constituer une partie d'une coiffe d'habillage d'un dossier ou d'une assise de siège.

On considère dans ce qui suit, à titre d'exemple non limitatif, que le complexe de siège (CS) est destiné à constituer une partie d'une coiffe d'habillage d'un dossier d'un siège de véhicule automobile. Mais, l'invention n'est pas limitée à ce type d'application. Elle concerne en effet n'importe quelle coiffe d'habillage propre à faire partie d'un dossier ou d'une assise d'un siège (éventuellement de type banquette), quel que soit le système dans lequel il est installé (véhicule ou bâtiment).

Par ailleurs, on considère dans ce qui suit, à titre d'exemple non limitatif, que le complexe de siège (CS) est destiné à constituer la partie centrale avant de la coiffe d'habillage d'un dossier de siège de véhicule automobile. Mais, l'invention n'est pas limitée à ce type d'implantation. En effet, un complexe de siège (CS), selon l'invention, peut également constituer la partie centrale arrière d'une coiffe d'habillage ou bien une partie latérale avant ou arrière d'une coiffe d'habillage.

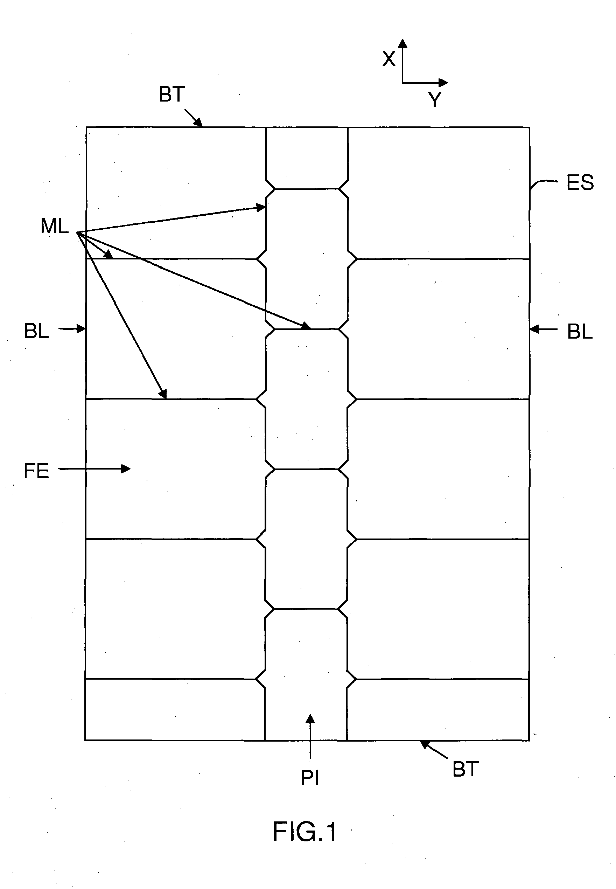

Sur les figures 1 à 7, la direction X représente une direction dite longitudinale, la direction Y représente une direction dite transversale, perpendiculaire à la direction X, et la direction Z représente une direction dite verticale, perpendiculaire aux directions X et Y.

Le procédé de réalisation selon l'invention comprend quatre étapes (i) à (iv) qui peuvent être réalisées chacune manuellement ou bien de façon automatisée.

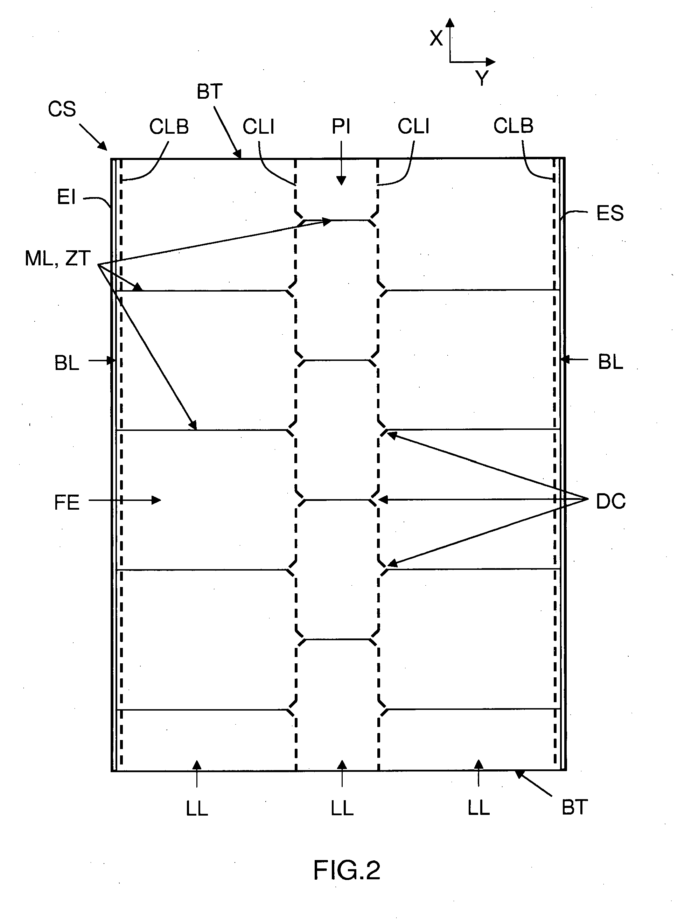

Une première étape consiste à solidariser (partiellement) ensemble un empiècement supérieur ES (illustré sur la figure 1) et un empiècement inférieur EI (partiellement illustré sur la figure 2), qui présentent des dimensions approximativement identiques et doivent faire partie d'un complexe de siège CS.

Comme illustré non limitativement sur la figure 1, l'empiècement supérieur ES présente par exemple une forme rectangulaire. Il est délimité par deux bords longitudinaux BL (parallèles à la direction X) et deux bords transversaux BT (parallèles à la direction Y). De même, et comme illustré non limitativement sur la figure 2, l'empiècement inférieur EI présente par exemple une forme rectangulaire. Il est délimité par deux bords longitudinaux (parallèles à la direction X) et deux bords transversaux (parallèles à la direction Y).

A titre d'exemple non limitatif, l'empiècement supérieur ES peut être en cuir ou bien en matériau textile, ou encore en PVC, et plus généralement en n'importe quel matériau présentant une souplesse suffisante pour assurer un aspect acceptable, et l'empiècement inférieur EI peut être réalisé dans un matériau non tissé. On entend ici par "matériau non tissé" un matériau relativement rigide (en fonction de l'épaisseur utilisée), de préférence relativement bon marché, et qui est couramment utilisé dans le domaine de l'automobile ou de l'ameublement pour les zones non visibles. Mais, il pourrait également s'agir de n'importe quel matériau textile ou matériau souple mais néanmoins suffisamment rigide et supportant les coutures, et de préférence bon marché.

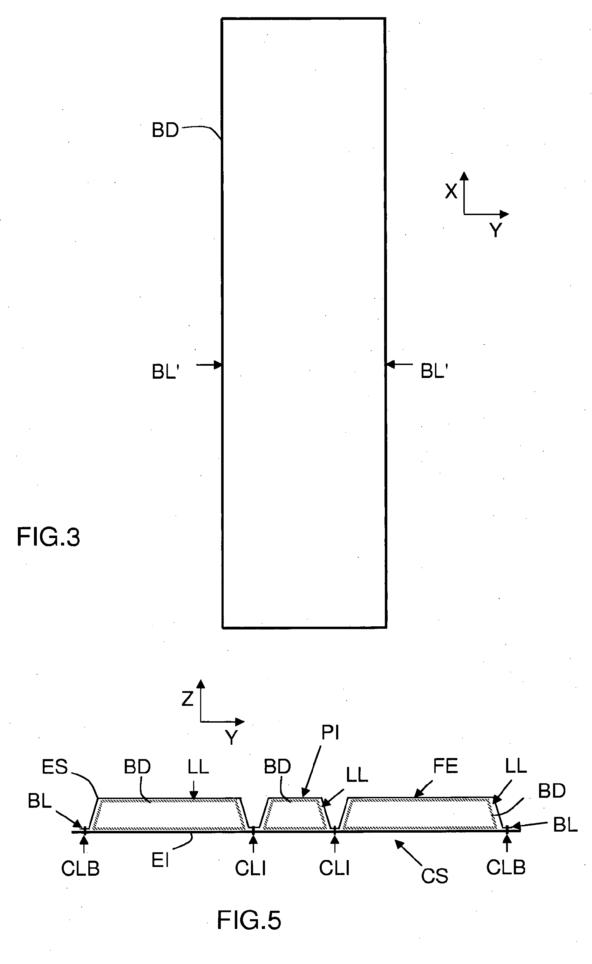

Comme illustré sur la figure 2, la solidarisation partielle de la première étape (i) résulte de la réalisation, d'une part, de deux coutures longitudinales CLB respectivement sur les deux bords longitudinaux BL des empiècements supérieur ES et inférieur EI, et, d'autre part, d'au moins une couture longitudinale CLI, qui comporte en au moins un endroit choisi un décrochement DC qui pointe vers une zone transversale ZT, dans une partie intermédiaire PI des empiècements supérieur ES et inférieur EI, située entre les deux bords longitudinaux BL. Grâce à ces coutures longitudinales CLB et CLI, et comme cela apparaît mieux sur la figure 5, on définit au moins deux logements longitudinaux LL entre les empiècements inférieur EI et supérieur ES.

On entend ici par "pointer vers une zone transversale ZT" le fait de présenter une courbure (convexité) orientée vers une (ou saillant du côté d'une) zone transversale ZT. Ainsi, dans l'exemple non limitatif illustré sur les figures 1 à 7, chaque décrochement DC présente une forme sensiblement en V et le point de liaison entre les deux parties sensiblement linéaires du V définit l'une des deux extrémités d'une zone transversale ZT (l'autre extrémité opposée étant définie soit par le centre d'un autre décrochement DC, soit par un bord latéral BL).

On notera que dans l'exemple non limitatif illustré sur les figures 1 à 7, on réalise dans la partie intermédiaire PI deux coutures longitudinales CLI comportant en des endroits choisis qui se correspondent (c'est-à-dire situés à un même niveau suivant la direction longitudinale X) des décrochements DC qui pointent vers des zones transversales ZT qui les joignent. Cela permet de définir trois logements longitudinaux LL entre les empiècements inférieur EI et supérieur ES, ici de manière à obtenir au final un complexe de siège CS dont les animations sont similaires à celles d'un bracelet de montre métallique.

De préférence, et comme illustré non limitativement sur la figure 1, préalablement à la première étape (i) ou au début de cette dernière il est préférable de commencer par définir sur la face externe FE de l'empiècement supérieur ES (c'est-à-dire celle qui est destinée à être orientée vers l'extérieur) chaque endroit où est située une zone transversale ZT et chaque endroit où doit être réalisée une couture longitudinale CLI de la partie intermédiaire PI.

A titre d'exemple, chaque endroit peut être défini par traçage d'une ligne sur la face externe FE de l'empiècement supérieur ES au moyen d'une encre discrète et non diffusante ou bien d'une craie ou encore d'une opération de couture automatisée.

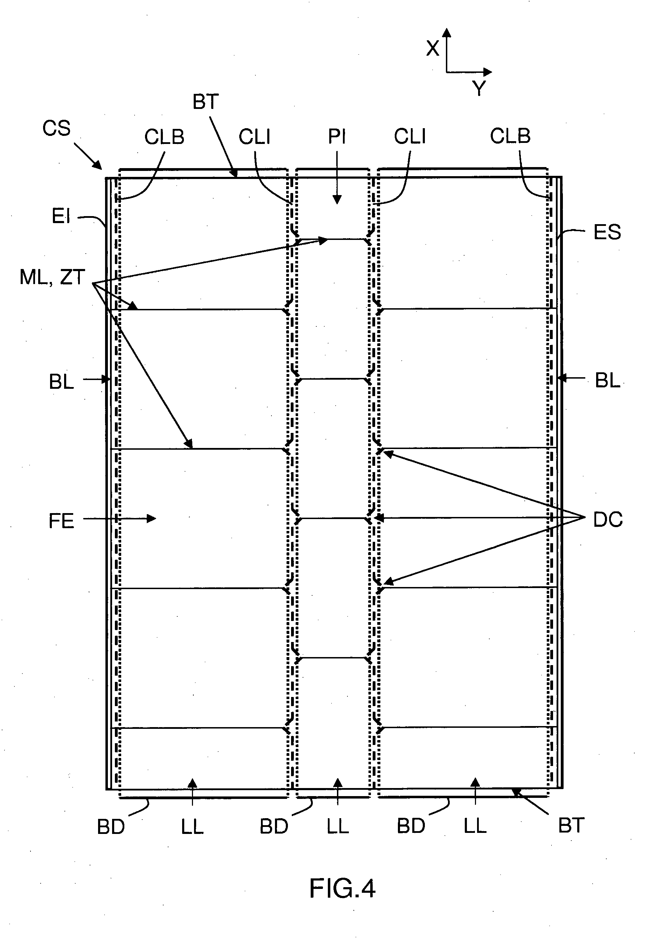

Une deuxième étape (ii) du procédé selon l'invention consiste à installer une bande déformable BD dans chaque logement longitudinal LL défini lors de la première étape (i). Le résultat de cette deuxième étape (ii) est illustré schématiquement sur les figures 4 et 5.

On entend ici par "bande déformable" une pièce qui présente des dimensions similaires à celles du logement longitudinal LL correspondant (de préférence par valeurs supérieures), et dont on peut modifier facilement les dimensions suivant les trois directions X, Y et Z afin de faciliter l'insertion dans ce logement longitudinal LL correspondant. L'épaisseur (suivant la direction Z) d'une bande déformable BD est choisie en fonction du "gonflant" que l'on souhaite conférer au complexe de siège CS. Par exemple, cette épaisseur peut être égale à environ 15 mm.

Par exemple, chaque bande déformable BD peut être réalisée en mousse (non rigide). Mais, elle pourrait être réalisée en d'autres matériaux déformables, comme par exemple la ouate ou les microfibres.

Par ailleurs, et comme illustré non limitativement sur la figure 3, il est particulièrement avantageux, avant d'installer une bande déformable BD dans le logement longitudinal LL correspondant, de pré-contraindre chaque bord longitudinal BL' de cette bande déformable BD. Ainsi, la bande déformable BD peut être immobilisée par chaque décrochement DC.

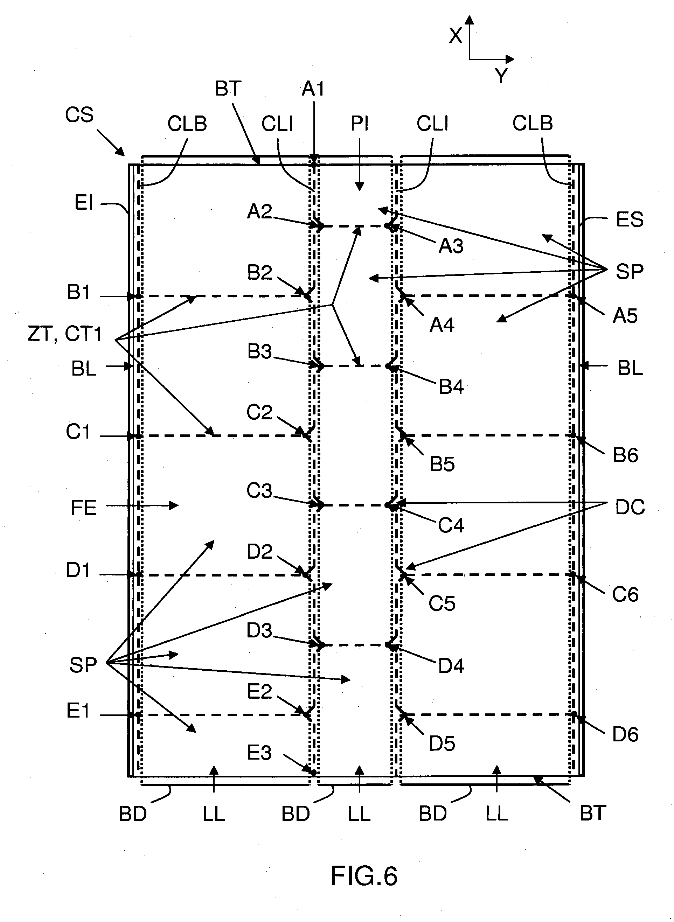

Une troisième étape (iii) du procédé selon l'invention consiste, comme illustré sur la figure 6, à poursuivre la solidarisation des empiècements inférieur EI et supérieur ES en réalisant dans chaque zone transversale ZT une couture transversale CT1 qui passe par un décrochement DC correspondant, en repliant sur lui-même l'excédant d'empiècement supérieur ES qui est localement induit par la présence de ce décrochement DC. Cela permet de définir dans chaque logement longitudinal LL des sous-parties SP qui contiennent respectivement des parties de la bande déformable BD correspondante.

On notera qu'il est important de soigneusement effectuer chaque repliement d'excédant d'empiècement supérieur ES sur lui-même dans l'axe de chaque décrochement DC d'une zone transversale ZT. C'est en effet chaque décrochement DC qui permet de faire un repli dans de bonnes conditions en repoussant la bande déformable BD du logement longitudinal LL voisin afin de l'empêcher de venir se placer dans la zone de repliement.

De préférence, chaque excédant d'empiècement supérieur ES peut être replié sur lui-même de manière à présenter localement une section sensiblement en forme de S (aplati ou écrasé par la couture transversale CT1 correspondante).

On notera également qu'il est possible de prédéfinir des trajets de couture que l'on effectue successivement lors de sous-étapes successives de la troisième étape (iii).

Plus précisément, lors d'une sous-étape on peut réaliser une couture transversale CT1 dans une zone transversale ZT qui est située au niveau d'un premier logement longitudinal LL, jusqu'à ce que l'on parvienne au décrochement DC correspondant d'une première couture longitudinale CLI, puis on peut poursuivre longitudinalement cette couture sur une portion de cette première couture longitudinale CLI jusqu'à ce que l'on parvienne à son décrochement DC suivant, qui pointe vers une autre zone transversale ZT située au niveau d'un second logement longitudinal LL voisin. Ensuite, on peut poursuivre transversalement cette couture afin de réaliser une autre couture transversale CT1 dans cette autre zone transversale ZT jusqu'à ce que l'on parvienne soit à une couture longitudinale CLB d'un bord longitudinal BL où l'on définit un point d'arrêt, soit à un nouveau décrochement DC correspondant d'une seconde couture longitudinale CLI, ce qui contraint à poursuivre longitudinalement la couture sur une portion de cette seconde couture longitudinale CLI jusqu'à ce que l'on parvienne à son décrochement DC suivant, qui pointe vers une autre zone transversale ZT située au niveau d'un troisième logement longitudinal LL voisin, où l'on poursuit transversalement la couture afin de réaliser encore une autre couture transversale CT1 dans cette autre zone transversale ZT jusqu'à ce que l'on parvienne à une couture longitudinale CLB d'un bord longitudinale BL où l'on définit un point d'arrêt.

On notera qu'à l'étape (iii) il est préférable de poursuivre longitudinalement la couture sur une portion d'une couture longitudinale CLI dans des trous qui sont identiques à ceux qui ont été effectués dans la première étape (i) lors de la réalisation de cette couture longitudinale CLI.

Dans l'exemple non limitatif illustré sur la figure 6, la troisième étape (iii) est décomposée en cinq sous-étapes successives A à E.

Une première sous-étape A part ici d'un point de départ A1 situé sur le bord longitudinal BL supérieur et se termine par un point d'arrêt A5 sur le bord longitudinal BL droit. Plus précisément, on coût longitudinalement du point A1 vers le point A2, puis on coût transversalement du point A2 vers le point A3, puis on coût longitudinalement du point A3 vers le point A4, puis on coût transversalement du point A4 vers le point A5.

Une deuxième sous-étape B part ici d'un point de départ B1 situé sur le bord transversal BT gauche et se termine par un point d'arrêt B6 sur le bord longitudinal BL droit. Plus précisément, on coût transversalement du point B1 vers le point B2, puis on coût longitudinalement du point B2 vers le point B3, puis on coût transversalement du point B3 vers le point B4, puis on coût longitudinalement du point B4 vers le point B5, puis on coût transversalement du point B5 vers le point B6.

Une troisième sous-étape C part ici d'un point de départ C1 situé sur le bord transversal BT gauche et se termine par un point d'arrêt C6 sur le bord longitudinal BL droit. Plus précisément, on coût transversalement du point C1 vers le point C2, puis on coût longitudinalement du point C2 vers le point C3, puis on coût transversalement du point C3 vers le point C4, puis on coût longitudinalement du point C4 vers le point C5, puis on coût transversalement du point C5 vers le point C6.

Une quatrième sous-étape D part ici d'un point de départ D1 situé sur le bord transversal BT gauche et se termine par un point d'arrêt D6 sur le bord longitudinal BL droit. Plus précisément, on coût transversalement du point D1 vers le point D2, puis on coût longitudinalement du point D2 vers le point D3, puis on coût transversalement du point D3 vers le point D4, puis on coût longitudinalement du point D4 vers le point D5, puis on coût transversalement du point D5 vers le point D6.

Une cinquième sous-étape E part ici d'un point de départ E1 situé sur le bord transversal BT gauche et se termine par un point d'arrêt E3 sur le bord transversal BT inférieur. Plus précisément, on coût transversalement du point E1 vers le point E2, puis on coût longitudinalement du point E2 vers le point E3.

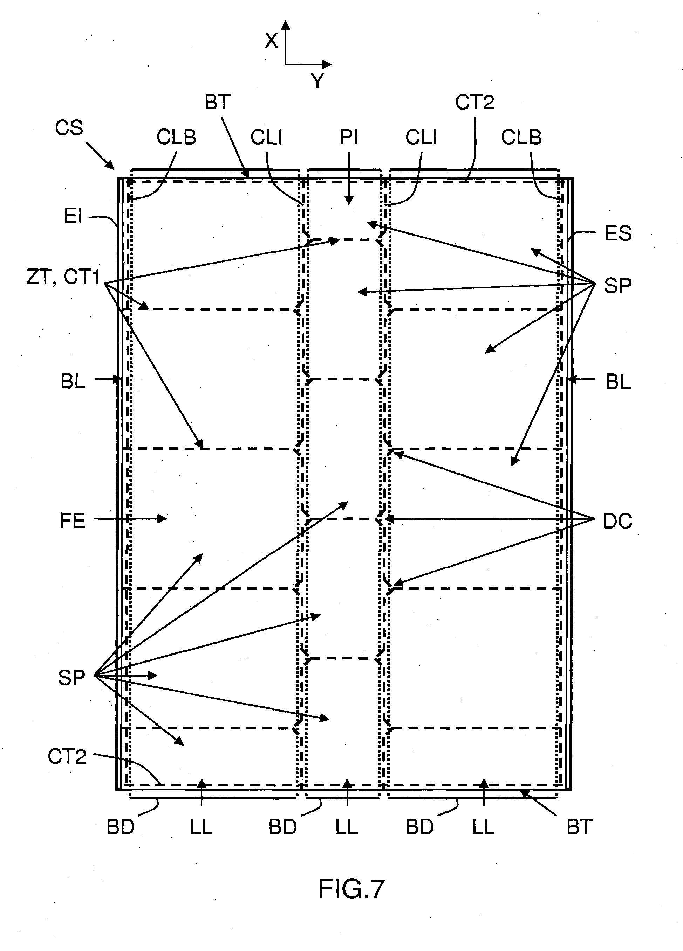

Une quatrième étape (iv) du procédé selon l'invention consiste, comme illustré sur la figure 7, à solidariser les empiècements inférieur EI et supérieur ES en réalisant deux coutures transversales CT2 respectivement sur les deux bords transversaux BT opposés (supérieur et inférieur), afin d'achever de réaliser le complexe de siège CS.

On notera que si les extrémités (supérieure et inférieure) des bandes déformables BD sortent des logements longitudinaux LL, comme c'est le cas dans l'exemple non limitatif illustré sur les figures 4 à 6, on les coupe au raz après avoir effectuées les deux coutures transversales CT2 respectivement sur les deux bords transversaux BT.

Le procédé selon l'invention offre plusieurs avantages, parmi lesquels:
- il permet de réaliser assez facilement des complexes comportant de nombreuses animations (éventuellement de différentes formes) en utilisant des empiècements supérieur et inférieur dont les dimensions initiales sont très proches des dimensions finales, ce qui limite les pertes et donc réduit les coûts,
- il peut être automatisé, au moins partiellement, ce qui peut permettre de réduire encore plus les coûts,
- il permet d'obtenir un véritable effet 3D au niveau des coutures longitudinales et transversales. Ainsi, et comme illustré dans l'exemple non limitatif, on peut obtenir, par exemple, un effet de type bracelet de montre métallique.

L'invention ne se limite pas aux modes de réalisation de procédé, de complexe de siège, de siège et de véhicule décrits ci-avant, seulement à titre d'exemple, mais elle englobe toutes les variantes que pourra envisager à l'évidence l'homme de l'art dans le cadre des revendications ci-après.

## Revendications

1. Procédé de réalisation d'un complexe de siège (CS) comprenant les étapes suivantes: (i) solidariser des empiècements supérieur (ES) et inférieur (El), devant faire partie d'un complexe de siège (CS), en réalisant deux coutures longitudinales (CLB) respectivement sur deux bords longitudinaux (BL), et au moins une couture longitudinale (CLI), comportant en au moins un endroit choisi un décrochement (DC) pointant vers une zone transversale, dans une partie intermédiaire (PI) située entre lesdits deux bords longitudinaux (BL), de manière à définir au moins deux logements longitudinaux (LL) entre lesdits empiècements inférieur (El) et supérieur (ES), (ii) installer une bande déformable (BD) dans chaque logement longitudinal (LL) ledit procédé étant **caractérisé en ce qu'**il comporte en outre les étapes suivantes, (iii) solidariser lesdits empiècements inférieur (EI) et supérieur (ES) en réalisant dans chaque zone transversale une couture transversale (CT1) passant par un décrochement (DC) correspondant, en repliant sur lui-même un excédant d'empiècement supérieur (ES) induit par la présence dudit décrochement (DC), afin de définir dans chaque logement longitudinal (LL) des sous-parties (SP) contenant des parties de la bande déformable (BD) correspondante, et (iv) solidariser lesdits empiècements inférieur (El) et supérieur (ES) en réalisant deux coutures transversales (CT2) respectivement sur deux bords transversaux (BT), afin d'achever de réaliser ledit complexe de siège (CS).

2. Procédé selon la revendication 1, **caractérisé en ce qu'**à l'étape (i) on commence par définir sur une face externe (FE) dudit empiècement supérieur (ES) chaque endroit où est située une zone transversale et chaque endroit où doit être réalisée une couture longitudinale (CLI) de ladite partie intermédiaire (PI).

3. Procédé selon la revendication 2, **caractérisé en ce qu'**à l'étape (i) on définit chaque endroit en traçant une ligne sur ladite face externe (FE) de l'empiècement supérieur (ES).

4. Procédé selon l'une des revendications 1 à 3, **caractérisé en ce qu'**à l'étape (iii) on replie sur lui-même chaque excédant d'empiècement supérieur (ES) de sorte qu'il présente localement une section sensiblement en forme de S.

5. Procédé selon l'une des revendications 1 à 4, **caractérisé en ce que** lesdits décrochements (DC) présentent une forme sensiblement en V.

6. Procédé selon l'une des revendications 1 à 5, **caractérisé en ce qu'**à l'étape (i) on réalise dans ladite partie intermédiaire (PI) deux coutures longitudinales (CLI) comportant en des endroits choisis qui se correspondent des décrochements (DC) pointant vers des zones transversales qui les joignent, de manière à définir trois logements longitudinaux (LL) entre lesdits empiècements inférieur (El) et supérieur (ES).

7. Procédé selon l'une des revendications 1 à 6, **caractérisé en ce que** l'on effectue l'étape (iii) en plusieurs sous-étapes dans certaines au moins desquelles on réalise une couture transversale (CT1) dans une zone transversale située au niveau d'un logement longitudinal (LL) jusqu'à ce que l'on parvienne au décrochement (DC) correspondant d'une couture longitudinale (CLI), puis on poursuit longitudinalement cette couture sur une portion de ladite couture longitudinale (CLI) jusqu'à ce que l'on parvienne à son décrochement (DC) suivant pointant vers une autre zone transversale située au niveau d'un autre logement longitudinal (LL) voisin, puis on poursuit transversalement cette couture afin de réaliser une autre couture transversale (CT1) dans cette autre zone transversale jusqu'à ce que l'on parvienne soit à une couture longitudinale (CLB) d'un bord longitudinal (BL) où l'on définit un point d'arrêt, soit à un nouveau décrochement (DC) correspondant d'une autre couture longitudinale (CLI), ce qui contraint à poursuivre longitudinalement la couture sur une portion de cette autre couture longitudinale (CLI) jusqu'à ce que l'on parvienne à son décrochement (DC) suivant pointant vers une autre zone transversale située au niveau d'encore un autre logement longitudinal (LL) voisin, où l'on poursuit transversalement la couture afin de réaliser encore une autre couture transversale (CT1) dans cette autre zone transversale jusqu'à ce que l'on parvienne à une couture longitudinale (CLB) d'un bord longitudinal (BL) où l'on définit un point d'arrêt.

8. Procédé selon la revendication 7, **caractérisé en ce qu'**à l'étape (iii) on poursuit longitudinalement ladite couture sur une portion d'une couture longitudinale (CLI) dans des trous qui sont identiques à ceux effectués dans l'étape (i) lors de la réalisation de cette couture longitudinale (CLI).

9. Procédé selon l'une des revendications 1 à 8, **caractérisé en ce qu'**à l'étape (ii) on utilise des bandes déformables (BD) réalisées en mousse.

10. Procédé selon l'une des revendications 1 à 9, **caractérisé en ce que** l'on réalise ledit complexe de siège (CS) avec un empiècement supérieur (ES) en cuir.

11. Procédé selon l'une des revendications 1 à 10, **caractérisé en ce que** l'on réalise ledit complexe de siège (CS) avec un empiècement inférieur (El) réalisé dans un matériau non tissé.

12. Complexe de siège (CS), **caractérisé en ce qu'**il est constitué d'empiècements inférieur (El) et supérieur (ES) et de bandes déformables (BD) solidarisés entre eux au moyen d'un procédé de réalisation selon l'une des revendications précédentes.

13. Siège, **caractérisé en ce qu'**il comprend au moins un complexe de siège (CS) selon la revendication 12.

14. Véhicule, **caractérisé en ce qu'**il comprend au moins un siège selon la revendication 13.

## Patentansprüche

1. Verfahren zur Erzeugung eines Sitzkomplexes (CS), das die folgenden Schritte umfasst:
(i) festes Verbinden eines oberen (ES) und eines unteren Einsatzes (EI), die Teil eines Sitzkomplexes (CS) sein sollen, durch Herstellen von zwei Längsnähten (CLB) jeweils auf zwei Längsrändern (BL) und mindestens einer Längsnaht (CLI), die an mindestens einer ausgewählten Stelle einen Rücksprung (DC) umfasst, der zu einer Querzone in einem Zwischenteil (PI) zeigt, der zwischen den zwei Längsrändern (BL) liegt, so dass mindestens zwei Längsaufnahmen (LL) zwischen dem unteren (EI) und dem oberen Einsatz (ES) definiert sind,
(ii) Installieren eines verformbaren Bands (BD) in jeder Längsaufnahme (LL), wobei das Verfahren **dadurch gekennzeichnet ist, dass** es ferner die folgenden Schritte umfasst, (iii) festes Verbinden des unteren (EI) und oberen Einsatzes (ES) durch Herstellen in jeder Querzone einer Quernaht (CT1), die durch einen entsprechenden Rücksprung (DC) läuft, indem ein Überschuss des oberen Einsatzes (ES), der durch die Gegenwart des Rücksprungs (DC) entsteht, auf sich selbst zurückgefaltet wird, um in jeder Längsaufnahme (LL) Unterteile (SP) zu definieren, die Teile des entsprechenden verformbaren Bands (BD) enthalten, und (iv) festes Verbinden des unteren (EI) und des oberen Einsatzes (ES) durch Herstellen von zwei Quernähten (CT2) jeweils auf zwei Querrändern (BT), um die Herstellung des Sitzkomplexes (CS) zu vollenden.

2. Verfahren nach Anspruch 1, **dadurch gekennzeichnet, dass** man bei dem Schritt (i) damit beginnt, auf einer Außenseite (FE) des oberen Einsatzes (ES) jede Stelle zu definieren, an der sich eine Querzone befindet, und jede Stelle, an der eine Längsnaht (CLI) des Zwischenteils (PI) ausgeführt werden muss.

3. Verfahren nach Anspruch 2, **dadurch gekennzeichnet, dass** man beim Schritt (i) jede Stelle definiert, indem man eine Linie auf der Außenseite (FE) des oberen Einsatzes (ES) zieht.

4. Verfahren nach einem der Ansprüche 1 bis 3, **dadurch gekennzeichnet, dass** man beim Schritt (iii) jeden Überschuss des oberen Einsatzes (ES) derart auf sich selbst zurückfaltet, dass er lokal einen Querschnitt im Wesentlichen in S-Form aufweist.

5. Verfahren nach einem der Ansprüche 1 bis 4, **dadurch gekennzeichnet, dass** die Rücksprünge (DC) im Wesentlichen eine V-Form aufweisen.

6. Verfahren nach einem der Ansprüche 1 bis 5, **dadurch gekennzeichnet, dass** man beim Schritt (i) in dem Zwischenteil (PI) zwei Längsnähte (CLI) herstellt, die an ausgewählten Stellen, die sich entsprechen, Rücksprünge (DC) umfassen, die zu Querzonen zeigen, die sie erreichen, so dass drei Längsaufnahmen (LL) zwischen dem unteren (EI) und dem oberen Einsatz (ES) definiert werden.

7. Verfahren nach einem der Ansprüche 1 bis 6, **dadurch gekennzeichnet, dass** man den Schritt (iii) in mehreren Unterschritten ausführt, bei welchen man bei mindestens einigen eine Quernaht (CT1) in einer Querzone herstellt, die im Bereich einer Längsaufnahme (LL) liegt, bis man zu dem entsprechenden Rücksprung (DC) einer Längsnaht (CLI) gelangt, man dann diese Naht längs auf einem Abschnitt der Längsnaht (CLI) fortsetzt, bis man zu ihrem nächsten Rücksprung (DC) gelangt, der zu einer anderen Querzone zeigt, die sich im Bereich einer anderen benachbarten Längsaufnahme (LL) befindet, man dann diese Naht quer fortsetzt, um eine weitere Quernaht (CT1) in dieser anderen Querzone herzustellen, bis man entweder zu einer Längsnaht (CLB) eines Längsrands (BL), wo man einen Verriegelungsstich definiert, oder zu einem neuen entsprechenden Rücksprung (DC) einer anderen Längsnaht (CLI) gelangt, was dazu zwingt, die Naht längs auf einem Abschnitt dieser anderen Längsnaht (CLI) fortzusetzen, bis man zu ihrem nächsten Rücksprung (DC) gelangt, der zu einer anderen Querzone zeigt, die sich im Bereich noch einer anderen benachbarten Längsaufnahme (LL) befindet, wo man die Naht quer fortsetzt, um noch eine andere Quernaht (CT1) in dieser anderen Querzone herzustellen, bis man zu einer Längsnaht (CLB) eines Längsrands (BL) gelangt, wo man einen Verriegelungsstich definiert.

8. Verfahren nach Anspruch 7, **dadurch gekennzeichnet, dass** man beim Schritt (iii) die Naht längs auf einem Abschnitt einer Längsnaht (CLI) in Öffnungen fortsetzt, die mit denjenigen identisch sind, die bei dem Schritt (i) bei der Herstellung dieser Längsnaht (CLI) ausgeführt wurden.

9. Verfahren nach einem der Ansprüche 1 bis 8, **dadurch gekennzeichnet, dass** man beim Schritt (ii) verformbare Bänder (BD), die aus Schaumstoff hergestellt sind, verwendet.

10. Verfahren nach einem der Ansprüche 1 bis 9, **dadurch gekennzeichnet, dass** man den Sitzkomplex (CS) mit einem oberen Einsatz (ES) aus Leder herstellt.

11. Verfahren nach einem der Ansprüche 1 bis 10, **dadurch gekennzeichnet, dass** man den Sitzkomplex (CS) mit einem unteren Einsatz (EI), der aus einem Vliesmaterial hergestellt ist, herstellt.

12. Sitzkomplex (CS), **dadurch gekennzeichnet, dass** er aus einem unteren (EI) und einem oberen Einsatz (ES) und aus verformbaren Bändern (BD), die untereinander fest mittels eines Herstellungsverfahrens nach einem der vorhergehenden Ansprüche verbunden sind, besteht.

13. Sitz, **dadurch gekennzeichnet, dass** er mindestens einen Sitzkomplex (CS) nach Anspruch 12 umfasst.

14. Fahrzeug, **dadurch gekennzeichnet, dass** es mindestens einen Sitz nach Anspruch 13 umfasst.

## Claims

1. A method for producing a seat complex (CS) including the following steps: (i) securing together upper (ES) and lower (EI) inserts, which are to form part of a seat complex (CS), by making two longitudinal seams (CLB) respectively on longitudinal edges (BL), and at least one longitudinal seam (CLI), comprising, at at least one chosen point, a kink (DC) pointing toward a transverse zone, in an intermediate part (PI) situated between the said two longitudinal edges (BL) so as to define at least two longitudinal housings (LL) between the said lower (EI) and the upper (ES) inserts, (ii) installing a deformable strip (BD) in each longitudinal housing (LL), the said method being **characterized in that** it further comprises the following steps: (iii) securing together the said lower (EI) and upper (ES) inserts by making in each transverse zone a transverse seam (CT1) that passes through a corresponding kink (DC), by folding an excess of upper insert (ES) brought about by the presence of the said kink (DC) onto itself in order, within each longitudinal housing (LL), to define subparts (SP) containing parts of the corresponding deformable strip (BD), and (iv) securing together the said lower (EI) and upper (ES) inserts by making two transverse seams (CT2) respectively on two transverse edges (BT) in order to finish making the said seat complex (CS).

2. The method according to Claim 1, **characterized in that** at step (i) one begins by defining on an external face (FE) of the said upper insert (ES) each point at which a transverse zone is situated and each point at which a longitudinal seam (CLI) of the said intermediate part (PI) is to be realized.

3. The method according to Claim 2, **characterized in that** at step (i) each point is defined by tracing a line on the said external face (FE) of the upper insert (ES).

4. The method according to one of Claims 1 to 3, **characterized in that** at step (iii) each excess of upper insert (ES) is folded on itself so that it has locally a substantially S-shaped cross-section.

5. The method according to one of Claims 1 to 4, **characterized in that** the said kinks (DC) are substantially V-shaped.

6. The method according to one of Claims 1 to 5, **characterized in that** at step (i) two longitudinal seams (CLI) are realized in the said intermediate part (PI), said longitudinal seams comprising, at selected points which correspond to one another, kinks (DC) pointing towards transverse zones which join them, so as to define three longitudinal housings (LL) between the said lower (EI) and upper (ES) inserts.

7. The method according to one of Claims 1 to 6, **characterized in that** step (iii) is carried out in several sub-steps, in at least some of which a transverse seam (CT1) is realized in a transverse zone situated at the level of a longitudinal housing (LL) until one arrives at the corresponding kink (DC) of a longitudinal seam (CLI), then this seam is followed along longitudinally over a portion of the said longitudinal seam (CLI) until one arrives at its following kink (DC), pointing towards another transverse zone situated at the level of another adjacent longitudinal housing (LL), then one follows along this seam transversely so as to realize another transverse seam (CT1) in this other transverse zone until one arrives either at a longitudinal seam (CLB) of a longitudinal edge (BL) where a fastening-off point is defined, or at a new corresponding kink (DC) of another longitudinal seam (CLI), which compels one to following along the seam longitudinally over a portion of this other longitudinal seam (CLI) until one arrives at its following kink (DC) pointing towards another transverse zone situated at the level of another further adjacent longitudinal housing (LL), where one follows along the seam transversely so as to realize another further transverse seam (CT1) in this other transverse zone until one arrives at a longitudinal seam (CLB) of a longitudinal edge (BL) where a fastening-off point is defined.

8. The method according to Claim 7, **characterized in that** at step (iii) the said seam is followed along over a portion of a longitudinal seam (CLI) in holes which are identical to those made in step (i) during the realization of this longitudinal seam (CLI).

9. The method according to one of Claims 1 to 8, **characterized in that** at step (ii) deformable strips (BD), made from foam, are used.

10. The method according to one of Claims 1 to 9, **characterized in that** the said seat complex (CS) is realized with an upper insert (ES) made of leather.

11. The method according to one of Claims 1 to 10, **characterized in that** the said seat complex (CS) is realized with a lower insert (EI) made of a non-woven material.

12. A seat complex (CS), **characterized in that** it is constituted by lower (EI) and upper (ES) inserts and by deformable strips (BD) secured to one another by means of a production method according to one of the preceding claims.

13. A seat, **characterized in that** it includes at least one seat complex (CS) according to Claim 12.

14. A vehicle, **characterized in that** it includes at least one seat according to Claim 13.
